# EUROPÄISCHE PATENTANMELDUNG

(11) **EP 3 498 758 A1**
(43) Veröffentlichungstag der Anmeldung: **19.06.2019**
(21) Anmeldenummer: 17206898.3
(22) Anmeldetag: 13.12.2017
(51) Int. Cl.: C08G 69/16, C07D 225/02, C07D 201/04

(54) **VERFAHREN ZUR HERSTELLUNG VON POLYMEREN AUS MONOMEREN UMFASSEND LAURINLACTAM**

(71) Anmelder: Evonik Degussa GmbH, 45128 Essen (DE)
(72) Erfinder: Die Erfindernennung liegt noch nicht vor

(57) **Zusammenfassung**

Die vorliegende Erfindung betrifft Verfahren zur Herstellung von Polymeren aus Monomeren umfassend Laurinlactam, umfassend die Schritte
a. Beckmann-Umlagerung eines Gemischs aus Cyclododecanoxim und Cyclohexanonoxim zu einem Gemisch aus Laurinlactam und Caprolactam in Gegenwart eines Beckmann-Umlagerungskatalysators,
b. Abtrennung von Laurinlactam aus dem in Schritt a. erhaltenen Gemisch,
c. Entfernung von Verunreinigungen aus dem Laurinlactam unter Erhalt aufge-reinigten Laurinlactams, und
d. Polymerisation von Monomeren umfassend aufgereinigtes Laurinlactam.

Zur Vermeidung von Verfärbungen oder Vergilbungen unter Alterungsbedingungen werden vor der Polymerisation polycyclische Stoffe enthaltend 18 Kohlenstoffatome und zumindest ein Heteroatom ausgewählt aus Sauerstoff und Stickstoff, die eine Molmasse zwischen 250 und 300 g/mol aufweisen, auf 500 ppm, bezogen auf Laurinlactam, begrenzt.

## Beschreibung

Die vorliegende Erfindung betrifft ein Verfahren zur Herstellung von Polymeren aus Monomeren umfassend Laurinlactam und ggf. weiteren Co-Monomeren sowie Polymere, die aus dem Verfahren erhalten werden.

Bekannte Polymere aus Monomeren umfassend Laurinlactam sind beispielsweise Polyamid 12, Copolyamide enthaltend Laurinlactam wie Caprolactam-Laurinlactam-Copolyamid oder BlockCopolymere wie Polyether-Block-Amide (PEBA). Laurinlactam wird beispielsweise aus Cyclododecanonoxim erhalten. Cyclododecanonoxim kann durch die Reaktion von Cyclododecanon und Hydroxylamin in einem organischen Lösungsmittel hergestellt werden (EP 2551261). Weiterhin kann Cyclododecanonoxim durch die Reaktion von Cyclododecanon mit Wasserstoffperoxid und Ammoniak in Anwesenheit eines Titansilikalitkatalysators gewonnen werden (EP 1316545 = US 2003/100795, EP 1663955 = US 2008/249300). Cyclododecanonoxim kann alternativ durch Fotooximierung von Cyclododecan erhalten werden (EP 0993438 = US 6197999).

Die Herstellung von Laurinlactam kann mittels Beckmann-Umlagerung aus einer Mischung aus Cyclododecanonoxim und Cyclohexanonoxim (Colactamisierung) und anschließender Aufreinigung von Laurinlactam erfolgen. Das Massenverhältnis Cyclododecanonoxim/Cyclohexanonoxim kann vorzugsweise 20/80 bis 60/40 entsprechen. Die Beckmann-Umlagerung kann in Anwesenheit einer starken Säure, Cyanurchlorid, Phosphortrichlorid oder Thionylchlorid erfolgen (Ullmann's encyclopedia 2009, 11, 33-36; EP 2013162 = US 2009/306367; EP2123635). Als starke Säure kann beispielweise Schwefelsäure benutzt werden. Nach der Beckmann-Umlagerung können Caprolactam und Laurinlactam voneinander getrennt werden.

Für viele Anwendungen ist die Farbe des Polymers sehr wichtig. Aus dem Stand der Technik ist bekannt, dass Verunreinigungen im Laurinlactam die Vergilbung von entsprechenden Polyamiden begünstigen. In EP 1773765 (US 2008/071081) werden Lactame mittels Fotooximation hergestellt, wobei chlorierte Verunreinigungen erhalten werden. Bei der alternativen Herstellung von Laurinlactam über Beckmann-Umlagerung ausgehend von einer Mischung aus Cyclododecanon und Cyclohexanonoxim (Colactamisierung) entstehen keine chlorierten Verunreinigungen. Dennoch werden Vergilbungen des Polymers aus diesem Laurinlactam beobachtet.

Die Farbe bzw. Vergilbung wird üblicherweise mittels Spektralphotometer ermittelt, wobei eine Quantifizierung anhand des b-Werts vorgenommen wird. Außerdem wird der Farbabstand ΔE zwischen dem Polymer vor und nach Alterung gemessen. Je niedriger diese Werte sind, desto weniger Vergilbung weist das Polymer auf.

Die Aufgabe der vorliegenden Erfindung bestand darin, ein Verfahren zur Herstellung von Polymeren aus Monomeren umfassend Laurinlactam bereitzustellen, welches gegenüber dem Stand der Technik geringere Vergilbung zeigt. Das Laurinlactam sollte dabei über die heute üblicherweise in großtechnischem Maßstab eingesetzte Beckmann-Umlagerung des Gemisches aus Cyclododecanoxims und Cyclohexanonoxims erhalten werden.

Es wurde nunmehr gefunden, dass die Anwesenheit von polycyclischen Stoffen mit 18 Kohlenstoffatomen und zumindest ein Heteroatom (Sauerstoff, Stickstoff) sowie mit einer Molmasse zwischen 250 und 300 g/mol in Laurinlactam die Farbe von laurinlactamhaltigen Polymeren wie Polyamid 12 beeinflusst. Solche Verunreinigungen entstehen während der Herstellung von Laurinlactam und verursachen maßgeblich die Vergilbung der Polymere nach Alterung (24 h bei 100 °C im Umlufttrockenschrank, Luftatmosphäre).

Demgemäß wurde ein Verfahren zur Herstellung von Polymeren aus Monomeren umfassend Laurinlactam gefunden, welches die folgenden Schritte umfasst:
a. Beckmann-Umlagerung eines Gemischs aus Cyclododecanoxim und Cyclohexanonoxim zu einem Gemisch aus Laurinlactam und Caprolactam in Gegenwart eines Beckmann-Umlagerungskatalysators,
b. Abtrennung von Laurinlactam aus dem in Schritt a. erhaltenen Gemisch,
c. Entfernung von Verunreinigungen aus dem Laurinlactam unter Erhalt aufgereinigten Laurinlactams, und
d. Polymerisation von Monomeren umfassend aufgereinigtes Laurinlactam.

Die Verunreinigungen sind polycyclische Stoffe, welche 18 Kohlenstoffatome und zumindest ein Heteroatom ausgewählt aus Sauerstoff und Stickstoff umfassen sowie eine Molmasse zwischen 250 und 300 g/mol aufweisen, wobei die Verunreinigungen in Schritt b. auf 500 ppm, vorzugsweise 100 ppm, jeweils bezogen auf Laurinlactam, begrenzt werden. Die Obergrenze bezieht sich auf die Summe der zuvor definierten Verunreinigungen. Die Verunreinigungen weisen vorzugsweise zwischen 250 nm und 290 nm ein lokales Absorptionsmaximum im UV-Spektrum auf.

Es wurde überraschend gefunden, dass eine erhöhte Konzentration dieser Verunreinigungen im Laurinlactam die Farbe bzw. Vergilbung eines laurinlactamhaltigen Polymers nach Alterung deutlich beeinflusst. Laurinlactamhaltige Polymere, die nach dem erfindungsgemäßen Verfahren hergestellt wurden, wiesen nach Alterung einen b-Wert < 5 und einen ΔE-Wert < 5 auf. Die Werte wurden mit einem Color i7 Spektralfotometer der Firma X-Rite nach DIN 6174 gemessen; weitere Angaben finden sich in den Beispielen.

Im Sinne dieser Erfindung sind Polymere aus Monomeren umfassend Laurinlactam zu verstehen als Polymere, die zumindest aus Laurinlactam als Monomer erhalten werden. Definitionsgemäß werden von Laurinlactam verschiedene Monomere als Co-Monomere bezeichnet. Damit umfasst der Begriff "Polymer aus Monomeren umfassend Laurinlactam" Homopolyamide und Co-Polyamide. Polymere aus Monomeren umfassend Laurinlactam sind insbesondere das Homopolyamid 12 oder Copolyamide wie PEBA oder Caprolactam-Laurinlactam-Copolyamide. Bevorzugte Polymere enthalten mindestens 20 Gew.-% Laurinlactam, besonders bevorzugt 30 Gew.-%, jeweils bezogen auf das Gesamtgewicht des Polymers. Ein ganz besonders bevorzugtes Polymer ist Polyamid 12.

Ein geeigneter Beckmann-Umlagerungskatalysator wird ausgewählt aus einer Säure mit pKs ≤ 0, Cyanurchlorid, Phosphortrichlorid, Thionylchlorid oder Mischungen daraus, wobei Schwefelsäure bevorzugt ist.

Nach der Beckmann-Umlagerung entsteht ein Gemisch, welches Laurinlactam und Caprolactam enthält. Um das Laurinlactam vom Caprolactam und ggf. weiteren Bestandteilen abzutrennen (Schritt b.), kann zum Beispiel eine flüssig-flüssig-Extraktion mit Wasser und einem organischen Lösemittel durchgeführt werden, wobei Caprolactam in der wässrigen Phase gelöst wird und Laurinlactam in der organischen Phase verbleibt. Das aromatische Lösemittel kann beispielweise Benzol, Toluol oder Xylol sein, bevorzugt Toluol. Das Caprolactam kann separat aufgereinigt werden und für die Herstellung von Polymeren verwendet werden.

Die Polymerisation des aufgereinigten Laurinlactams sowie ggf. weiterer Monomere (Co-Monomere) erfolgt vorzugsweise bei einer Temperatur zwischen 250 °C und 350 °C. Die optionalen Co-Monomere werden für laurinlactamhaltige Polymere wie Copolyamide oder Polyether-blockamide benötigt. Der bevorzugte Temperaturbereich liegt zwischen 270 °C und 330 °C, besonders bevorzugt sind 280 °C bis 300 °C. Die Polymerisation wird vorzugsweise in Anwesenheit von Wasser vorgenommen, wobei der Wassergehalt bevorzugt 2 bis 51 Gew.-%, bezogen auf das Gesamtgewicht aus Wasser und Monomeren, beträgt. Besonders bevorzugt werden 3 bis 15 Gew.-% Wasser eingesetzt. In einer bevorzugten Ausführungsform wird die Polymerisation bei einer Temperatur zwischen 250 °C und 350 °C in Gegenwart von 2 bis 51 Gew.-% Wasser durchgeführt.

Geeignete Co-Monomere werden ausgewählt aus Lactamen mit 6 bis 14 C-Atomen, insbesondere Caprolactam, Aminocarbonsäuren mit 6 bis 14 C-Atomen, Diaminen mit 4 bis 23 C-Atomen, Dicarbonsäuren mit 4 bis 23 C-Atomen und Polyether mit zwei terminalen Gruppen. Polyether können beispielweise Polyethylenglykole, Polypropylenglykole oder Polytetramethylenetherglykole sein. Terminale Endgruppen der Polyether sind beispielsweise Hydroxyl-, Amino- und Carboxylgruppen. Vorzugsweise haben die Polyether zwei terminale Hydroxylgruppen, zwei terminale Aminogruppen, zwei terminale Carboxylgruppen oder je eine terminale Hydroxyl- und Aminogruppe. Ein aus dem Verfahren erhaltenes Homopolyamid oder Copolyamid kann anschließend erneut mit Polyethern mit zwei terminalen Gruppen polymerisiert werden.

Die Polymerisation kann im Batchverfahren oder im kontinuierlichen Verfahren durchgeführt werden, wobei ein kontinuierliches Verfahren bevorzugt ist. Sie kann ohne Katalysator oder unter Zugabe einer katalytischen Menge einer anorganischen Säure durchgeführt werden. Als anorganische Säure eignen sich beispielweise H₃PO₄ oder H₃PO₂.

Die Verunreinigungen, die nach der Beckmann-Umlagerung vorliegen, können mittels Gaschromatographie-Massenspektrometrie (GC-MS) bestimmt werden. Die Massenspektrometrie ermöglicht die Ermittlung der molaren Masse und der Summenformel. Mittels GC wird der Anteil an Verunreinigungen im Laurinlactam ermittelt. Die Bestimmungen wurden mit einem Triplus Autosampler mit Trace GC 1310 und QExactive Orbitrap durchgeführt. Die Trennung wurde mit einer Säule TG 5SilMS von 30 m Länge und 0,25 mm Durchmesser vorgenommen. Das Temperaturprogramm entsprach 1 min bei 60 °C, dann Aufheizen bis 220 °C (8K/min), dann Aufheizen bis 250 °C (1K/min) und 10 min bei 250 °C. Die MS Detektion wurde mittels Elektronenstoßionisation im Massenbereich 30 bis 500 g/mol und eine Massenauflösung R=60000 durchgeführt.

Weiterhin konnte mittels UV-Spektrometrie und ¹H-NMR und ¹³C-NMR nachgewiesen werden, dass zumindest ein großer Teil dieser Verunreinigungen im Laurinlactam ein lokales Absorptionsmaximum zwischen 250 und 290 nm aufweist. Zudem können die Verunreinigungen mindestens eine Doppelbindung und/oder einen aromatischen Ring beinhalten. UV-Spektren wurden mit einem HPLC Gerät System Accela 1050 von ThermoFisher Scientific gemessen. Dafür wurde eine Trennsäule 200 x 2mm Hypersil Gold C18, Partikelgröße 1.9 µm benutzt und eine Mischung aus Wasser, Trifluoressigsäure, Acetonitiril und n-Propanol als Laufmittel eingesetzt. Mit dem Photodiodenzeile- (PDA) Detektor des Geräts wurden UV-Spektren über die jeweiligen Peaks akkumuliert und Untergrund korrigiert. NMR Spektren wurden mit einem 500 MHz Spektrometer der Firma Bruker in CDCl₃ gemessen.

Aus den nachgewiesenen Summenformeln und den Hinweisen aus den UV- und NMR-Spektren wird vermutet, dass beispielweise die folgenden Strukturen Verunreinigungen im Sinne der Erfindung darstellen:

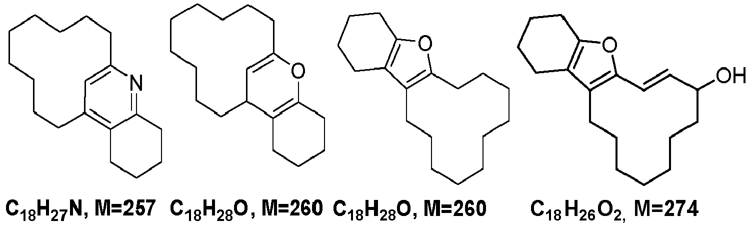

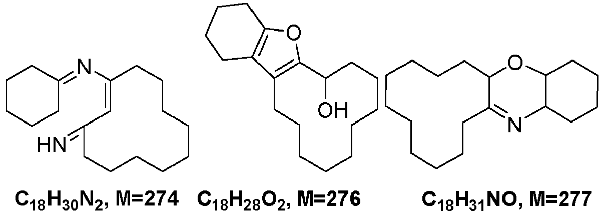

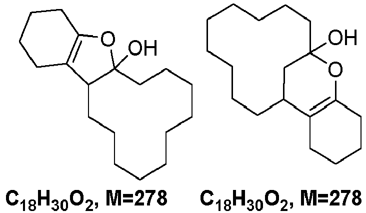

Die Verunreinigungen entstehen durch chemische Reaktionen zwischen zwei Verbindungen enthaltend zwölf bzw. sechs C-Atome. Diese Verbindungen können beispielweise Cyclododecanon, Cyclododecanonoxim, Cyclododecenon (ungesättigtes Keton), Cyclododecenonoxim (ungesättigtes Oxim), Cyclohexanon, Cyclohexanonoxim, Cyclohexenon oder Cyclohexenonoxim umfassen. Die unerwünschten Nebenreaktionen können zum Beispiel während der Oximbildung, während der Beckmann-Umlagerung oder während der Destillation von Laurinlactam stattfinden. Nach der Trennung von Laurinlactam und Caprolactam beispielsweise mittels flüssig-flüssig-Extraktion mit Wasser und organischem Lösemittel bleiben diese Verunreinigungen in der organischen Phase, worin sich das Laurinlactam befindet. Aus diesem Grund müssen diese Verunreinigungen in einem nachfolgenden Schritt entfernt werden.

Die Entfernung der Verunreinigungen aus dem Laurinlactam (Schritt c.) wird vorzugsweise mittels Kristallisation, Destillation oder Rektifikation vorgenommen. Hierbei ist es bei der Destillation bevorzugt, wenn diese mit mindestens fünf theoretischen Böden vorgenommen wird.

In einer besonders bevorzugten Ausführungsform der Erfindung lässt sich der Gehalt an Verunreinigungen im Laurinlactam zusätzlich durch eine Aufarbeitung des Gemisches aus Cyclododecanoxim und Cyclohexanonoxims vor der Beckmann-Umlagerung verringern. Das Oximgemisch wird hierzu einer Wäsche mit Wasser, einer Wäsche mit Lauge wie Natronlauge, einer Wäsche mit Säure wie Salz- oder Schwefelsäure, einer Hydrierung oder einer Kombinationen davon unterzogen. Diese Behandlung des Oximgemisches kann die Bildung von Verunreinigungen im Laurinlactam reduzieren, so dass die Aufreinigung des Laurinlactams anschließend effizienter wird.

Das Gemisch aus Cyclododecanonoxim und Cyclohexanonoxim wird vorzugsweise aus einem Gemisch aus Cyclododecanon und Cyclohexanon erhalten. Verfahren zur Herstellung des Oximgemisches sind die im Stand der Technik bekannten Verfahren aus Keton und Hydroxylamin oder Wasserstoffperoxid mit Ammoniak.

Darüber hinaus bildet ein Polymer enthaltend Laurinlactam, hergestellt nach dem zuvor beschriebenen Verfahren, einen weiteren Gegenstand der Erfindung.

### Beispiel

In den nachfolgenden Beispielen wird die Herstellung von Polyamid 12 nach unterschiedlichen erfindungsmäßen Verfahren sowie nicht erfindungsgemäße Referenzbeispiele beschrieben.

Der im Folgenden verwendete Begriff "Verunreinigungen" bezieht sich auf die folgende Definition: Polycyclische Stoffe enthaltend 18 Kohlenstoffatome und zumindest ein Heteroatom ausgewählt aus Sauerstoff und Stickstoff, die Molmasse liegt zwischen 250 und 300 g/mol

### Beispiele A: Herstellung von Laurinlactam

### Beispiel A1: Herstellung von Laurinlactam und anschließende Destillation

15,3 kg einer 25 Gew.-%igen Lösung von Hydroxylaminsulfat in Wasser wurden in einen 30 L-Reaktor bei 60 °C eingefüllt. Der pH-Wert des Gemisches wurde mit 25%iger NaOH-Lösung (in Wasser) auf 5,5 eingestellt und die Temperatur wurde auf 90 °C erhöht. Dann wurden 1,41 kg Cyclododecanon und 1,32 kg Cyclohexanon zugegeben. Das zweiphasige Gemisch wurde intensiv gerührt, wobei der pH-Wert kontinuierlich durch Dosierung von 25%iger NaOH-Lösung bei 5,5 eingestellt und die Temperatur bei 95 °C geregelt wurde. Nach 4 h zeigte eine Gaschromatographie (GC)-Analyse die vollständige Umsetzung von Cyclododecanon und Cyclohexanon in Cyclododecanoxim und Cyclohexanonoxim. Die Rührung wurde gestoppt, damit sich die Phasen trennen konnten. Die wässrige Phase wurde abgelassen und die organische Phase wurde zweimal bei 95 °C mit 3 kg Wasser gewaschen.

Zu dem Gemisch aus Cyclododecanonoxim und Cyclohexanonoxim aus dem letzten Schritt wurden dann 3,9 kg konzentrierte Schwefelsäure zugegeben. Das Gemisch wurde bis 120 °C aufgeheizt, wobei ein Druck von 1,5 bar erreicht wurde. Das Reaktionsgemisch wurde während 4 h gerührt, wobei das Cyclododecanonoxim und das Cyclohexanonoxim vollständig zum Laurinlactam und Caprolactam umgesetzt wurden. Anschließend wurde das Gemisch bei 95 °C in einen 30L-Glasreaktor zudosiert, der bereits mit 2 L gesättigte wässrige Ammoniumsulfatlösung befüllt war. Der pH-Wert wurde mit einer 15 %-igen Ammoniaklösung auf pH 5,5 eingestellt und die Mischung wurde während 2 h gerührt. Anschließend wurde die Rührung gestoppt und die Phasen getrennt. Zu der organischen Phase wurden dann 9 kg Toluol und 9 kg Wasser zugegeben und das zweiphasige Gemisch wurde während 30 min bei 60 °C gerührt. Die Phasen wurden dann getrennt. Die organische Phase enthaltend Toluol und Laurinlactam wurde in eine erste Destillationskolonne überführt, worin Toluol abdestilliert wurde. Der Sumpf aus der ersten Kolonne bestand aus 1,49 kg rohem Laurinlactam. Dieses rohe Laurinlactam hatte eine Reinheit von 99,83 % und enthielt 950 ppm Verunreinigungen.

Das rohe Laurinlactam wurde in einer zweiten Destillationskolonne mit 5 theoretischen Trennstufen bei 200 °C Sumpftemperatur und einem Druck von 10 mbar destilliert. Im Destillat wurden 1,46 kg Laurinlactam erhalten. Das Laurinlactam hatte eine Reinheit von 99,94 % und enthielt lediglich 40 ppm an Verunreinigungen.

### Beispiel A2: Herstellung von Laurinlactam und anschließende Kristallisation

Das rohe Laurinlactam aus Beispiel A1 wurde in 5,1 kg Hydrocumol bei 100 °C aufgelöst. Die resultierende 23 Gew.-%ige Lösung von Laurinlactam in Hydrocumol wurde langsam über 10 h bis 20 °C abgekühlt, was zu einer Kristallisation des reinen Laurinlactams führte. Das Laurinlactam wurde dann abfiltriert und bei 100 °C unter Vakuum (1 mbar) getrocknet, wodurch 1,35 kg reines Laurinlactam erhalten wurde. Das Laurinlactam hatte eine Reinheit von 99,99 % und enthielt 5 ppm Verunreinigungen.

### Beispiel A3: Herstellung von Laurinlactam und anschließende Destillation

15,5 kg einer 25 Gew.-%igen Lösung von Hydroxylaminsulfat in Wasser wurden in einen 30 L-Reaktor bei 60 °C eingefüllt. Der pH-Wert des Gemisches wurde mit 25 %iger NaOH-Lösung (in Wasser) auf 5,5 eingestellt und die Temperatur wurde auf 90 °C erhöht. Dann wurden 620 g Cyclododecanon und 1770 g Cyclohexanon zugegeben. Das zweiphasige Gemisch wurde intensiv gerührt, wobei der pH-Wert kontinuierlich durch Dosierung von 25 %iger NaOH-Lösung bei 5,5 eingestellt wurde und die Temperatur bei 95 °C geregelt wurde. Nach 4 h zeigte eine GC-Analyse die vollständige Umsetzung von Cyclododecanon und Cyclohexanon in Cyclododecanoxim und Cyclohexanonoxim. Die Rührung wurde gestoppt, damit sich die Phasen trennen konnten. Die wässrige Phase wurde abgelassen und die organische Phase wurde zweimal bei 95 °C mit 3 kg Wasser gewaschen.

Zu dem Gemisch aus Cyclododecanonoxim und Cyclohexanonoxim aus dem letzten Schritt wurden dann 3,9 kg konzentrierte Schwefelsäure zugegeben. Das Gemisch wurde bis 120 °C aufgeheizt, wobei ein Druck von 1,5 bar erreicht wurde. Das Reaktionsgemisch wurde während 4 h gerührt, wobei das Cyclododecanonoxim und das Cyclohexanonoxim vollständig zum Laurinlactam und Caprolactam umgesetzt wurden. Anschließend wurde das Gemisch bei 95 °C in einen 10 L-Glasreaktor zudosiert, der bereits mit 2 L gesättigte wässrige Ammoniumsulfatlösung befüllt war. Der pH-Wert wurde mit einer 15 %igen Ammoniaklösung auf pH 5,5 eingestellt und die Mischung wurde während 2 h gerührt. Anschließend wurde die Rührung gestoppt und die Phasen getrennt. Zu der organischen Phase wurden dann 9 kg Toluol und 9 kg Wasser zugegeben und das zweiphasige Gemisch wurde während 30 min bei 60 °C gerührt. Die Phasen wurden dann getrennt. Die organische Phase enthaltend Toluol und Laurinlactam wurde in eine erste Destillationskolonne überführt, worin Toluol abdestilliert wurde. Der Sumpf aus der ersten Kolonne bestand aus 665 g rohem Laurinlactam. Dieses rohe Laurinlactam hatte eine Reinheit von 99,81 % und enthielt 1250 ppm Verunreinigungen.

Das rohe Laurinlactam wurde in einer zweiten Destillationskolonne mit 5 theoretischen Trennstufen bei 200 °C Sumpftemperatur und einem Druck von 10 mbar destilliert. Im Destillat wurde 650 g Laurinlactam erhalten. Das Laurinlactam hatte eine Reinheit von 99,94 % und enthielt lediglich 60 ppm an Verunreinigungen.

### Beispiele B: Herstellung von Polyamid 12

### Beispiel B1 (erfindungsgemäß): Herstellung von farblosem Polyamid 12

10 g reines Laurinlactam aus dem Beispiel A1 (40 ppm Verunreinigungen) wurde zusammen mit 10 g Wasser, 0,12 g Dodecandisäure und 0,6 mg H₃PO₂ in einen 25 mL druckfesten Reaktor eingefüllt. Das Gemisch wird 15 min mit Stickstoff inertisiert und mit einem Metallbad auf 130 °C aufgeheizt. Dann wurde die Temperatur über 30 min bis 280 °C aufgeheizt. Dabei entstand ein Druck von 10 bar. Die Temperatur wurde während 2,5 h bei 280 °C gehalten, wobei ein Druck von 22 bar erreicht wurde. Dann wurde der Druck langsam über 30 min bis zum atmosphärischen Druck entspannt. Das Reaktionsgemisch wurde noch während 2,5 h mit N₂ bei 280 °C überleitet. Der Reaktor wurde anschließend bis Raumtemperatur abgekühlt und 10,1 g Polyamid 12 wurde erhalten.

Nach der Herstellung des Polyamids wurden auf einer Drehbank mit dem Abstechstahl planparallele Scheiben (Maßabweichung < 1/10) mit einem Durchmesser von 14 mm und einer Dicke von 2 mm aus dem erstarrten Schmelzekörper abgedreht. Einzelne Scheiben mit Lunkern wurden ausgesondert. Die Farbe der Scheiben wurde anschließend mit einem Color i7 Spektralfotometer der Firma X-Rite nach DIN 6174 gemessen. Die Messungen wurden mit Glanzeinschluss und 10 mm Blende und mit der Lichtart D65/10° durchgeführt. Die Farbmessung der Polyamid-Scheibe ergab einen b-Wert von 0,3.

Die Alterung der Proben wurde in einem Umlufttrockenschrank unter normalen atmosphärischen Bedingungen bei einer Temperatur von 100 °C für 24 h durchgeführt. Anschließend wurde die Farbe erneut gemessen und das Material wies einen b-Wert von 3,7 und einen ΔE-Wert von 4,3 auf.

### Beispiel B2 (erfindungsgemäß): Herstellung von farblosem Polyamid 12

10 g reines Laurinlactam aus dem Beispiel A2 (5 ppm Verunreinigungen) wurde zusammen mit 10 g Wasser, 0,12 g Dodecandisäure und 0,6 mg H₃PO₂ in einen 25 mL druckfesten Reaktor eingefüllt. Das Gemisch wurde 15 min mit Stickstoff inertisiert und mit einem Metallbad auf 130 °C aufgeheizt. Dann wurde die Temperatur über 30 min bis 280 °C aufgeheizt. Dabei entstand ein Druck von 10 bar. Die Temperatur wurde während 2,5 h bei 280 °C gehalten, wobei ein Druck von 22 bar erreicht wurde. Dann wurde der Druck langsam über 30 min bis zum atmosphärischen Druck entspannt. Das Reaktionsgemisch wurde noch während 2,5 h mit N₂ bei 280 °C überleitet. Der Reaktor wurde anschließend bis Raumtemperatur abgekühlt und 10,1 g Polyamid 12 wurde erhalten.

Scheiben des Polyamidpräparats wurden wie vorstehend beschrieben aus dem erstarrten Schmelzekörper abgedreht. Eine Farbmessung nach DIN 6174 ergab einen b-Wert von 0,2.

Die Scheibe wurde während 24 h im Umlufttrockenschrank bei 100 °C gelagert. Anschließend wurde die Farbe wieder gemessen und das Material wies einen b-Wert von 3,2 und einen ΔE-Wert von 4,1 auf.

### Beispiel B3 (erfindungsgemäß): Herstellung von farblosem Polyamid 12

10 g reines Laurinlactam aus dem Beispiel A3 (60 ppm Verunreinigungen) wurde zusammen mit 10 g Wasser, 0,12 g Dodecandisäure und 0,6 mg H₃PO₂ in einen 25 mL druckfesten Reaktor eingefüllt. Das Gemisch wird 15 min mit Stickstoff inertisiert und mit einem Metallbad auf 130 °C aufgeheizt. Dann wurde die Temperatur über 30 min bis 280 °C aufgeheizt. Dabei entstand ein Druck von 10 bar. Die Temperatur wurde während 2,5 h bei 280 °C gehalten, wobei ein Druck von 22 bar erreicht wurde. Dann wurde der Druck langsam über 30 min bis zum atmosphärischen Druck entspannt. Das Reaktionsgemisch wurde noch während 2,5 h mit N₂ bei 280 °C überleitet. Der Reaktor wurde anschließend bis Raumtemperatur abgekühlt und 10,1 g Polyamid 12 wurde erhalten.

Nach der Herstellung des Polyamids wurden auf einer Drehbank mit dem Abstechstahl planparallele Scheiben (Maßabweichung < 1/10) mit einem Durchmesser von 14 mm und einer Dicke von 2 mm aus dem erstarrten Schmelzekörper abgedreht. Einzelne Scheiben mit Lunkern wurden ausgesondert. Die Farbe der Scheiben wurde anschließend mit einem Color i7 Spektralfotometer der Firma X-Rite nach DIN 6174 gemessen. Die Messungen wurden mit Glanzeinschluss und 10 mm Blende und mit der Lichtart D65/10° durchgeführt. Die Farbmessung der Polyamid-Scheibe ergab einen b-Wert von 0,6.

Die Alterung der Proben wurde in einem Umlufttrockenschrank unter normalen atmosphärischen Bedingungen bei einer Temperatur von 100 °C für 24 h durchgeführt. Anschließend wurde die Farbe erneut gemessen und das Material wies einen b-Wert von 3,9 und einen ΔE-Wert von 4,4 auf.

### Referenzbeispiel B4: Herstellung von Polyamid 12 aus Laurinlactam mit 530 ppm Verunreinigungen

5 mg Mischung von polyzyklischer Stoffe enthaltend 18 Kohlenstoffatomen mit einer Molmasse zwischen 250 und 300 g/mol (1,2 mg C₁₇H₂₇N, 1,3 mg C₁₈H₂₈O, 0,5 mg C₁₈H₃₁NO, 0,8 mg C₁₈H₂₆O₂, 0,5 mg C₁₈H₂₈O₂, 0,7 mg C₁₈H₃₀O₂) wurde dem Laurinlactam aus Beispiel A1 zugesetzt. Das resultierende verunreinigte Laurinlactam enthielt 540 ppm Verunreinigungen.

10 g verunreinigtes Laurinlactam (540 ppm Verunreinigungen) wurde zusammen mit 10 g Wasser, 0,12 g Dodecandisäure und 0,6 mg H₃PO₂ in einen 25 mL druckfesten Reaktor eingefüllt.

Das Gemisch wurde 15 min mit Stickstoff inertisiert und mit einem Metallbad auf 130 °C aufgeheizt. Dann wurde die Temperatur über 30 min bis 280 °C aufgeheizt. Dabei entstand ein Druck von 10 bar. Die Temperatur wurde während 2,5 h bei 280 °C gehalten, wobei ein Druck von 22 bar erreicht wurde. Dann wurde der Druck langsam über 30 min bis zum atmosphärischen Druck entspannt. Das Reaktionsgemisch wurde noch während 2,5 h mit N₂ bei 280 °C überleitet. Der Reaktor wurde anschließend bis Raumtemperatur abgekühlt und 10,1 g Polyamid 12 wurde erhalten.

Scheiben des Polyamidpräparats wurden wie vorstehend beschrieben aus dem erstarrten Schmelzekörper abgedreht. Eine Farbmessung nach DIN 6174 ergab einen b-Wert von 3,0.

Die Scheibe wurde während 24 h im Umlufttrockenschrank bei 100 °C gelagert. Anschließend wurde die Farbe wieder gemessen und das Material wies einen b-Wert von 12,7 und einen ΔE-Wert von 9,6 auf. Das Material wies bei optischer Betrachtung unter Tageslicht eine deutlich gelbe Farbe auf.

### Referenzbeispiel B5: Herstellung von Polyamid 12 aus Laurinlactam mit 520 ppm Verunreinigungen

5 mg Mischung von polyzyklischer Stoffe enthaltend 18 Kohlenstoffatomen mit einer Molmasse zwischen 250 und 300 g/mol (1,2 mg C₁₇H₂₇N, 1,3 mg C₁₈H₂₈O, 0,5 mg C₁₈H₃₁NO, 0,8 mg C₁₈H₂₆O₂, 0,5 mg C₁₈H₂₈O₂, 0,7 mg C₁₈H₃₀O₂) wurde dem Laurinlactam aus Beispiel A2 zugesetzt. Das resultierende verunreinigte Laurinlactam enthielt dann 505 ppm Verunreinigungen.

10 g verunreinigtes Laurinlactam (505 ppm Verunreinigungen) wurde zusammen mit 10 g Wasser, 0,12 g Dodecandisäure und 0,6 mg H₃PO₂ in einen 25 mL druckfesten Reaktor eingefüllt. Das Gemisch wurde 15 min mit Stickstoff inertisiert und mit einem Metallbad auf 130 °C aufgeheizt. Dann wurde die Temperatur über 30 min bis 280 °C aufgeheizt. Dabei entstand ein Druck von 10 bar. Die Temperatur wurde während 2,5 h bei 280 °C gehalten, wobei ein Druck von 22 bar erreicht wurde. Dann wurde der Druck langsam über 30 min bis zum atmosphärischen Druck entspannt. Das Reaktionsgemisch wurde noch während 2,5 h mit N₂ bei 280 °C überleitet. Der Reaktor wurde anschließend bis Raumtemperatur abgekühlt und 10,1 g Polyamid 12 wurde erhalten.

Scheiben des Polyamidpräparats wurden wie vorstehend beschrieben aus dem erstarrten Schmelzekörper abgedreht. Eine Farbmessung nach DIN 6174 ergab einen b-Wert von 3,1.

Die Scheibe wurde während 24 h im Umlufttrockenschrank bei 100 °C gelagert. Anschließend wurde die Farbe wieder gemessen und das Material wies einen b-Wert von 13,2 und einen ΔE-Wert von 10,3 auf. Das Material wies bei optischer Betrachtung unter Tageslicht eine deutlich gelbe Farbe auf.

### Ergebnis

Tabelle 1 fasst die b- und ΔE-Werte der fünf Versuche der Beispiele B zusammen.

**Tabelle 1: b- und ΔE-Werte der fünf Versuche.**

| **Beispiel** | **Laurinlactam aus Beispiel...** | **Menge polyzyklischer Stoffe (bezogen auf LL)** | **b-Wert vor Alterung** | **b-Wert nach Alterung** | **ΔE-Wert nach Alterung** |
|---|---|---|---|---|---|
| B1 (erfindungsgemäß) | A1 | 40 ppm | 0,3 | 3,7 | 4,3 |
| B2 (erfindungsgemäß) | A2 | 5 ppm | 0,2 | 3,2 | 4,1 |
| B3 (erfindungsgemäß) | A3 | 60 ppm | 0,6 | 3,9 | 4,4 |
| B4 (Referenz) | A1 | 540 ppm | 3,0 | 12,7 | 9,6 |
| B5 (Referenz) | A2 | 505 ppm | 3,1 | 13,2 | 10,3 |

Polyamide, die aus Laurinlactam mit Verunreinigungen unterhalb von 500 ppm hergestellt wurden, zeigen nach der Alterung nach optischer Betrachtung geringe bzw. keine gelbliche Verfärbung. Ihre b- und ΔE-Werte liegen im Bereich von 3,2 bis 4,4 und damit unterhalb von 5.

Polyamide hingegen, die aus verunreinigtem Laurinlactam mit Verunreinigungen über 500 ppm synthetisiert wurden, zeigen nach Alterung optisch eine deutliche Gelbfärbung. Die b- und ΔE-Werte befinden sich in einem Bereich von 9,6 bis 13,2 und damit deutlich über 5.

## Patentansprüche

1. Verfahren zur Herstellung von Polymeren aus Monomeren umfassend Laurinlactam, umfassend die Schritte
a. Beckmann-Umlagerung eines Gemischs aus Cyclododecanoxim und Cyclohexanonoxim zu einem Gemisch aus Laurinlactam und Caprolactam in Gegenwart eines Beckmann-Umlagerungskatalysators,
b. Abtrennung von Laurinlactam aus dem in Schritt a. erhaltenen Gemisch,
c. Entfernung von Verunreinigungen aus dem Laurinlactam unter Erhalt aufgereinigten Laurinlactams, und
d. Polymerisation von Monomeren umfassend aufgereinigtes Laurinlactam,
wobei die Verunreinigungen polycyclische Stoffe enthaltend 18 Kohlenstoffatome und zumindest ein Heteroatom ausgewählt aus Sauerstoff und Stickstoff umfassen sowie eine Molmasse zwischen 250 und 300 g/mol aufweisen, wobei die Verunreinigungen in Schritt b. auf 500 ppm, bezogen auf Laurinlactam, begrenzt werden.

2. Verfahren nach Anspruch 1, **dadurch gekennzeichnet, dass** die Verunreinigungen mittels Kristallisation oder Destillation entfernt werden.

3. Verfahren nach Anspruch 2, **dadurch gekennzeichnet, dass** die Destillation mit mindestens fünf theoretischen Trennstufen vorgenommen wird.

4. Verfahren nach einem der vorherigen Ansprüche, **dadurch gekennzeichnet, dass** das Cyclododecanonoxim vor der Beckmann-Umlagerung vorbehandelt wird, wobei die Vorbehandlung ausgewählt ist aus Wäsche mit Wasser, Wäsche mit Lauge, Wäsche mit Säure, Hydrierung, Kristallisation oder Kombinationen davon.

5. Verfahren nach einem der vorherigen Ansprüche, **dadurch gekennzeichnet, dass** die Polymerisation kontinuierlich durchgeführt wird.

6. Verfahren nach einem der vorherigen Ansprüche, **dadurch gekennzeichnet, dass** der Beckmann-Umlagerungskatalysator ausgewählt ist aus einer Säure mit pKs ≤ 0, Cyanurchlorid, Phosphortrichlorid, Thionylchlorid oder Mischungen daraus, vorzugsweise Schwefelsäure.

7. Verfahren nach einem der vorherigen Ansprüche, **dadurch gekennzeichnet, dass** die Polymerisation bei einer Temperatur zwischen 250 °C und 350 °C, in Anwesenheit von 2 bis 51 Gew.-% Wasser, bezogen auf das Gesamtgewicht aus Monomeren und Wasser, durchgeführt wird.

8. Verfahren nach einem der vorherigen Ansprüche, **dadurch gekennzeichnet, dass** die Verunreinigungen in Schritt b. auf 100 ppm, bezogen auf Laurinlactam, begrenzt werden.

9. Verfahren nach einem der vorherigen Ansprüche, **dadurch gekennzeichnet, dass** das Polymer mindestens 20 Gew.-% Laurinlactam, bezogen auf das Gesamtgewicht des Polymers, enthält.

10. Polymer enthaltend Laurinlactam, hergestellt nach einem der vorherigen Ansprüche.
